# EUROPEAN PATENT APPLICATION

(11) **EP 0 649 728 A1**
(43) Date of publication of application: **26.04.1995**
(21) Application number: 94307217.3
(22) Date of filing: 03.10.1994
(51) Int. Cl.: B29D 11/00, F21V 7/22

(54) **Mirror**

(30) Priority: 16.10.1993 GB 9321406
(71) Applicant: BRITAX (GECO) S.A., F-77981 St. Fargeau-Ponthierry Cédex (FR)
(72) Inventor: Carbonel, Michel, F-77420 Champs S-Marne (FR)
(74) Representative: Hollinghurst, Antony

(57) **Abstract**

A reflector for a mirror is made in a mould comprising a first mould half (10) and a second mould half (12). Flexible sheet material (22), having a reflective surface, is placed in the second mould half (12) with the reflective surface facing the first mould half (10). Synthetic material, which is transparent to visible light, is then injected into the cavity (16) in the first mould half (10) to form a rigid body (26) with the reflective surface abutting one surface thereof.

## Description

This invention relates to a method of making a reflector in a mould comprising a first mould half and a second mould half, the method comprising positioning flexible sheet material having a reflective surface in the second mould half and injecting synthetic material into the first mould half to form a rigid body with the reflective surface abutting one surface thereof.

GB-A-2165182 discloses a method of making a reflector for lighting apparatus in this way. The present invention is concerned with making a reflective member for a mirror assembly, especially a vehicle mirror assembly.

According to the invention, in a method of the type described above, the flexible sheet material is placed in the second mould half with its reflective surface facing the first mould half and the material injected into the first mould half is transparent to visible light.

Preferably the body having a reflective surface is a thin film of flexible plastics material.

In one form of the invention, the flexible plastics material is in the form of an elongate web which is positioned across a mould half comprising a substantially flat surface and a succession of rigid bodies are moulded onto the web which is advanced across the surface of the flat mould half between each injection operation.

Alternatively, the flexible plastics material may be preformed into discrete parts which are individually positioned in the mould before each injection operation.

The invention is particularly applicable to the production of mirrors where the transparent substrate carrying the reflective layer is required to be of a shape which is difficult or expensive to produce from glass. For example, the invention may be used to produce reflective prisms for dipping interior mirrors for vehicles. It may be also be used to produce curved mirrors, particularly aspheric mirrors.

Embodiments of the invention will now be described, by way of example, with reference to the accompanying drawings, in which:
Figure 1 is a sectional view of a mould, in accordance with a first embodiment of the invention, in its closed state prior to the injection of the transparent plastics material;
Figure 2 is a cross-sectional view similar to Figure 1, but with the mould open after the injection phase has been completed; and
Figure 3 is a side view of a reflective prism produced in the mould shown in Figures 1 and 2;
Figure 4 is a sectional view of a mould, in accordance with another embodiment of the invention, with the mould halves open and prior to insertion of the flexible plastics material;
Figure 5 is a sectional view similar to Figure 4 but with the mould closed and the transparent material injected;
Figure 6 is a side view of a reflective prism produced in the mould illustrated in Figures 4 and 5
Figure 7 shows an elevation of a vehicle interior mirror assembly having a prism reflector in accordance with the invention, with the prism removed;
Figure 8 is a sectional view on the line 8 - 8 in Figure 7 with the prism in place;
Figure 9 is a perspective view of a vehicle exterior mirror assembly having an aspheric reflector in accordance with the invention; and
Figure 10 is a partially broken away perspective view of the reflector of the mirror assembly shown in Figure 9.

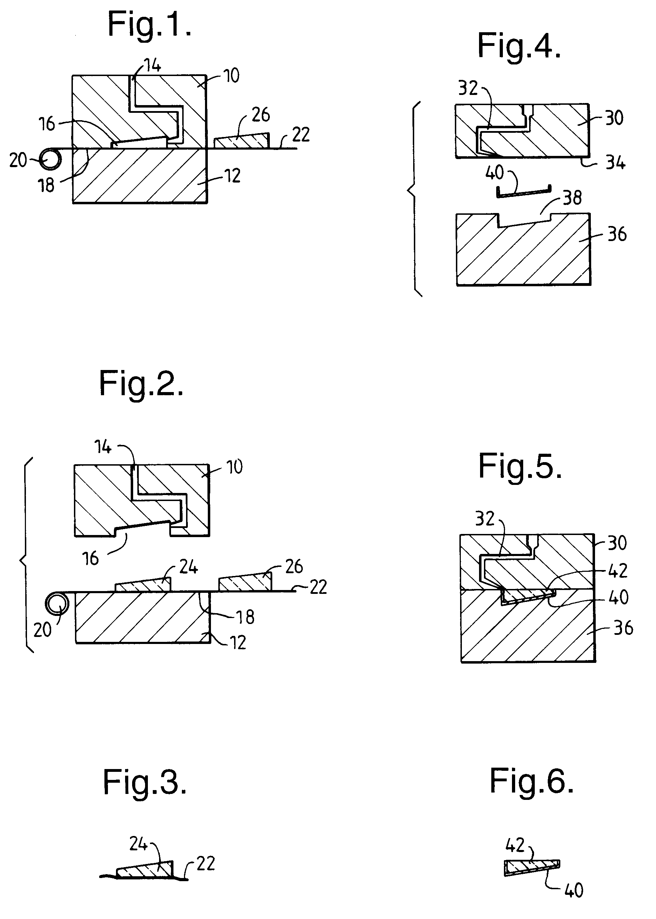

Referring to Figure 1, a mould for an injection moulding process comprises an upper mould half 10 and a lower mould half 12. The upper mould half 10 contains a sprue 14 leading to a cavity 16 for moulding a prism for an interior mirror for a motor car. The lower mould half 12 has a flat upper surface 18 for closing the cavity 16.

A dispensing reel 20 for a film 22 of flexible plastics material is mounted adjacent to the left-hand side of the lower mould half 12. The upper surface of the film 22 (the outer surface on the reel 20) is reflective.

In order to mould a prism in the cavity 16, the mould is first closed with the film 22 across its lower half 12, as shown in Figure 1. Next, transparent plastics material is injected through the sprue 14 into the cavity 16 to form a prism 24. Next, the mould is opened as shown in Figure 2. The film 22 is then displaced to the right to bring the newly moulded prism 24 into the position formerly occupied by the most recent previously moulded prism 26. The cycle can then be repeated.

As the film 22 is drawn away from the lower mould half 12, it is cut to separate the individual prisms, the prism 24 being shown in Figure 3. Subsequently, the surplus film 22 is cut away around the edges of the prism 24. The result is a moulded plastics prism with a second-surface reflective layer.

Figure 4 illustrates an alternative mould for use in accordance with the invention. An upper mould half 30 has a sprue 32 leading to its lower surface 34 which is flat. The corresponding lower mould half 36 has a cavity 38 for forming a prism for a vehicle interior mirror, similar to the prism 24 of Figures 1 to 3.

Thin film flexible plastics material, having a reflective surface on one side, is formed into individual channel-shaped components 40, each shaped to conform to the bottom and the left and right sides of the cavity 38. One such component is placed in the cavity 38 and the mould halves 30, 36 closed. Next, transparent plastics material is injected through the sprue 32 to form a prism 42 as illustrated in Figure 5. The mould 30, 36 is then open and the prism 42 with its reflective layer 40 removed from the cavity 38. The completed prism is shown in Figure 6.

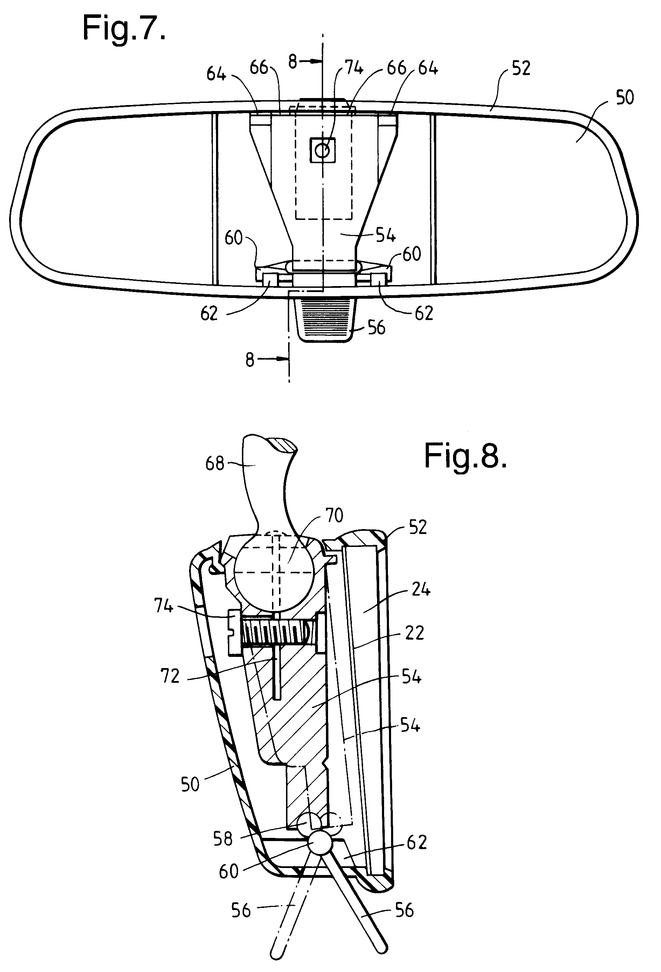

Figures 7 and 8 show an interior mirror assembly, of the type disclosed in GB-A-1187170, having a mirror case 50, made from plastics material such as polypropylene and having a reinforced grooved rim 52 to receive and grip a plastics prism 24 (as illustrated in Figure 3) with the reflective film 22 on the surface facing into the case 50. The mirror case 50 is carried on a mounting plate 54 (Figure 8). A rockable actuating lever 56 has a part-cylindrical nose portion 58 which engages in a part-cylindrical recess in the lower edge of the mounting plate 54, and trunnions 60 which are received in part-cylindrical bearing recesses in rigid bearing brackets in the lower part of the mirror case 50. The case 50 also has similar rigid bearing brackets 64 in its upper part, engaging over laterally spaced shoulders 66 on the upper end of the mounting plate 54. The dimensions of these parts are such that the lever 56 is urges to one of its two stable end positions by the resilience of the plastics material of the case 50. The stable end position shown in solid lines in Figure 8 is the normal position in which a user views the image reflected from the reflective film 22. The stable end position shown in broken lines is the anti-dazzle position in which a user views the image reflected from the front surface of the prism 24. The prism 42 of Figure 6 may be used instead of the prism 24 of Figure 3.

The mirror assembly is mounted on an arm 68 (Figure 8) which is secured to the vehicle body and which terminates in a ball 70 which is received in a part-spherical socket in the upper edge of the mounting plate 54, a slit 72 and a screw 74 allowing the clamping force to be adjusted.

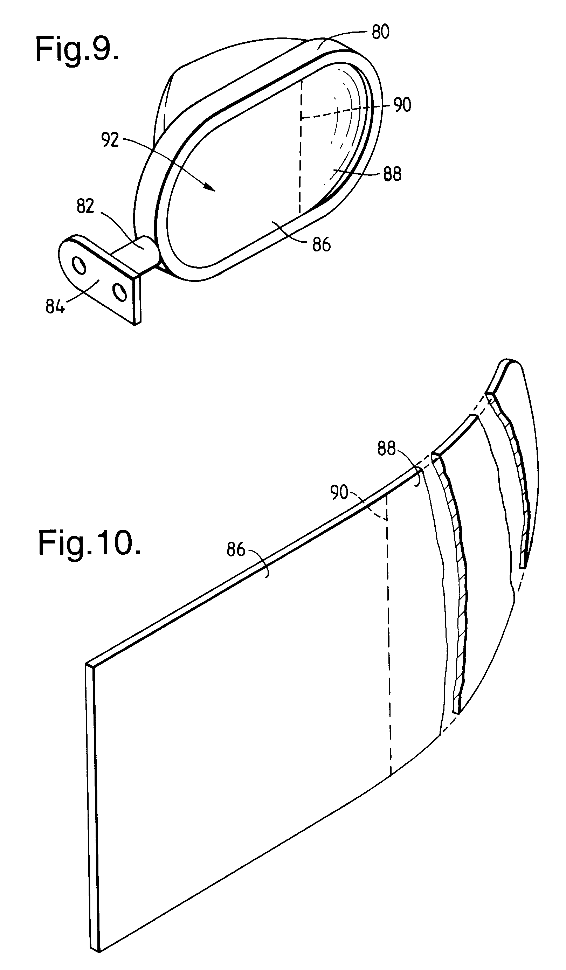

Figures 9 and 10 show an exterior mirror assembly, of the type disclosed in EP-A-0210757, having a mirror case 80 mounted on an arm 82 having a mounting foot 84. The mirror case contains an aspheric reflective member in accordance with the invention which has two integral mirror portions 86 and 88, the mirror portion 86 being plane and the mirror portion 88 being convex. The reflective film 22, 40 is on the inside of the mirror portions 86 and 88.

The line of join between the mirror portions 86 and 88 is indicated by a dotted line 90. The convex portion 88 enables a user to see reflected images objects immediately adjacent to and slightly behind him which would otherwise be in the well-known "blind spot". Preferably, the radius of curvature of the convex portion 88 in directions parallel to the line 90 at any particular point is equal to the radius of curvature in directions perpendicular thereto.

## Claims

1. A method of making a reflector for a mirror in a mould comprising a first mould half (10, 30) and a second mould half (12, 36), the method comprising positioning flexible sheet material (22, 40) having a reflective surface in the second mould half (12, 36) and injecting synthetic material into the first mould half (10, 30) to form a rigid body (24, 26, 42, 86, 88) with the reflective surface abutting one surface thereof, characterised in that the flexible sheet material (22, 40) is placed in the second mould half (12, 36) with its reflective surface facing the first mould half (10, 30) and the material (24, 26, 42) injected into the first mould half (10, 30) is transparent to visible light.

2. A method according to claim 1, wherein the flexible sheet material (22, 40) is a thin film of plastics material.

3. A method according to claim 2, wherein the flexible plastics material is in the form of an elongate web (22), the second mould half (12) comprises a substantially flat surface, and a succession of rigid bodies (24, 26) are moulded onto the web (22) which is advanced across the surface of the second mould half (12) between each injection operation.

4. A method according to claim 2, wherein the flexible plastics material is preformed into discrete parts (40) which are individually positioned in the second mould half (36) before each injection operation.

5. A mirror for a vehicle mirror assembly, made by a method according to any preceding claim.

6. A mirror according to claim 5, wherein the rigid body is a prism (24, 26, 42).

7. A mirror according to claim 5, wherein the rigid body has a curved surface (88) abutting the flexible sheet material.

8. A mirror according to claim 7, wherein said curved surface (88) of the rigid body is aspheric.
